# EUROPÄISCHE PATENTSCHRIFT

(11) **EP 1 369 557 B1**
(45) Veröffentlichungstag und Bekanntmachung des Hinweises auf die Patenterteilung: **15.08.2007**
(21) Anmeldenummer: 03011990.3
(22) Anmeldetag: 28.05.2003
(51) Int. Cl.: F01N 3/023, F01N 3/035, F01N 3/025

(54) **Kraftfahrzeug mit einem Diesel-Antriebsmotor mit mittels Kraftstoffdampfeindüsung diskontinuierlich regenerierbarem Abgasreinigungssystem**
Vehicle with diesel engine with discontinuously regenerated exhaust gas purification system using fuel vapour injection
Véhicule entrainé par un moteur diesel comprenant un système d'épuration de gaz d'échappement à régénération discontinue par l'injection des vapeurs de carburant

(30) Priorität: 07.06.2002 DE 10225273; 05.12.2002 DE 20218811 U
(43) Veröffentlichungstag der Anmeldung: 10.12.2003
(60) Teilanmeldung: 05028734.1
(73) Patentinhaber: ArvinMeritor Emissions Technologies GmbH, 86154 Augsburg (DE)
(72) Erfinder: Ranalli, Marco, 86161 Augsburg (DE); Schmidt, Stefan, 86462 Langweid (DE); Mayr, Andreas, 86405 Waltershofen (DE); Klement, Jürgen, 86663 Asbach-Bäumenheim (DE)
(74) Vertreter: Sties, Jochen

(56) Entgegenhaltungen:
- EP-A- 0 132 166
- EP-A- 0 971 102
- WO-A-01/34950
- DE-A- 2 234 601
- DE-A- 3 139 565
- DE-A- 19 717 544
- DE-A- 19 855 385
- US-A- 4 449 362
- PATENT ABSTRACTS OF JAPAN vol. 018, no. 408 (M-1647), 29. Juli 1994 (1994-07-29) & JP 06 117224 A (MITSUBISHI MOTORS CORP), 26. April 1994 (1994-04-26)
- PATENT ABSTRACTS OF JAPAN vol. 1996, no. 02, 29. Februar 1996 (1996-02-29) & JP 07 269329 A (MITSUBISHI HEAVY IND LTD), 17. Oktober 1995 (1995-10-17)

## Beschreibung

Die vorliegende Erfindung betrifft ein Kraftfahrzeug mit einem Diesel-Antriebsmotor, dessen Abgasanlage ein diskontinuierlich regenerierbares Abgasreinigungssystem aufweist, das eine Dieselkraftstoff katalytisch verbrennende Katalysatoreinheit umfaßt. Diskontinuierlich regenerierbare Abgasreinigungssysteme in diesem Sinne können insbesondere Dieselpartikelfilter und NOₓ-Speicherkatalysatoren umfassen.

Zur Einhaltung umweltgesetzlicher Vorgaben werden die Abgase von verbrennungsmotorisch angetriebenen Kraftfahrzeugen einer Reinigung unterzogen. Namentlich werden zur Reduktion der partikelförmigen Emissionen der Abgase von durch einen Dieselmotor angetriebenen Kraftfahrzeugen geeignete Partikelfilter eingesetzt. Derartige Partikelfilter müssen von Zeit zu Zeit regeneriert werden, indem die auf der Filteroberfläche angesammelten Partikel abgebrannt werden. Aufgrund der bei modernen Dieselmotoren relativ niedrigen Abgastemperaturen muß selbst bei Verwendung von Kraftstoffadditiven, die die ohne derartige Additive je nach Rußzusammensetzung zwischen 470 °C und 600 °C liegende Rußentzündungstemperatur um ca. 100 °C zu senken vermögen, allerdings langfristig zu einer Verstopfung des Partikelfilters führen und dessen Reinigung erforderlich machen, die Abgastemperatur zur Einleitung der Regeneration durch geeignete Maßnahmen bzw. Einrichtungen angehoben werden, wenn eine Filterregeneration auch außerhalb des Vollastbetriebs möglich sein soll.

Vorgeschlagen wurden hierzu diverse dem Partikelfilter vorgeschaltete Brenner (vgl. z.B. DE 19504183 A1 und DE 19717544 A1). Nachteilig ist dabei allerdings der erhebliche bauliche und finanzielle Aufwand, der durch Integration des vergleichsweise großen Brenners in die Abgasanlage erheblich vergrößerte erforderliche Einbauraum sowie die nachteilige Beeinflussung der Strömungsverhältnisse innerhalb der Abgasleitung durch den Brenner.

Eine im Hinblick auf einige der vorstehend genannten Gesichtspunkte günstigere Lösung ist in der EP 132166 A1 vorgeschlagen worden, indem eine niedrigsiedende organische Flüssigkeit an einer in das dem Partikelfilter vorgeschaltete abgasführende Bauteil ragenden Glühkerze verdampft und der Dampf entweder nach seiner Durchmischung mit dem sauerstoffhaltigen Abgas an der Spitze der Glühkerze entzündet oder aber - ohne Entzündung - dem Abgasstrom zugemischt wird. Im zuletzt genannten Fall erfolgt eine Temperaturerhöhung des dem Partikelfilter zugeleiteten Abgases durch katalytische Oxidation des Dampfes der organischen Flüssigkeit in einem katalytisch beschichteten Bereich des Partikelfilters. Besonderer Nachteil dabei ist insbesondere der mit der Bevorratung der niedrigsiedenden organischen Flüssigkeit verbundene technische und logistische Aufwand. Ferner setzt die Regeneration des Rußfilters unter Einsatz dieser Heizeinrichtung Abgastemperaturen von über 450 °C voraus, die bei modernen Dieselmotoren nur unter Vollast erreicht werden.

Die DE 3139565 A1 beschreibt die Einspritzung von Dieselkraftstoff über Zerstäuberdüsen in oder unmittelbar vor einen katalytisch beschichteten Bereich eines Partikelfilters, um auf diese Weise durch katalytische Oxidation des Kraftstoffs die Abgastemperatur zu erhöhen. Um die katalytische Oxidation einzuleiten, ist in den katalytisch beschichteten Bereich des Partikelfilters ein elektrisches Heizelement eingebettet. Besondere Nachteile bei dem aus der DE 3139565 A1 bekannten System sind neben der erheblichen Inhomogenität der Temperaturverteilung, daß der zerstäubte Kraftstoff dem Abgasstrom durch teilweises Verdampfen Wärme entzieht und daß die Zerstäuberdüsen unter den in ungereinigtem Abgas eines Dieselmotors herrschenden Bedingungen zum Verstopfen neigen, so daß die betreffende Heizeinrichtung binnen kurzem funktionsuntüchtig wird; dies erklärt, weshalb Systeme nach der DE 3139565 A1 niemals zum Serieneinsatz gelangten.

Die WO-A-0134950 beschreibt ein Abgassystem, bei dem einem NOₓ-Speicherkatalysator eine Kraftstoff-Verdampfungseinheit vorgeschaltet ist. Diese Verdampfungseinheit verwendet eine Glühkerze.

Schließlich wurde versucht, die Abgastemperatur mittels elektrischer Heizelemente auf die Zündtemperatur des auf dem Partikelfilter angesammelten Rußes zu erhöhen; derartige Versuche wurden allerdings wieder aufgegeben, da die hierfür erforderliche elektrische Leistung in konventionellen Kraftfahrzeugen nicht bereitgestellt werden kann.

Im Lichte des vorstehend erläuterten Standes der Technik liegt der vorliegenden Erfindung die Aufgabe zugrunde, ein eine Abgasanlage mit einem diskontinuierlich regenerierbare Abgasreinigungssystem aufweisendes Kraftfahrzeug der eingangs angegebenen Art zu schaffen, bei dem die für den Regenerationsbetrieb des Abgasreinigungssystems erforderlichen Aggregate technisch einfach und kostengünstig aufgebaut sind, einen nur geringen zusätzlichen Einbauraum in Anspruch nehmen, wartungsarm sind und zuverlässig arbeiten.

Gelöst wird diese Aufgabenstellung gemäß der vorliegenden Erfindung durch ein Kraftfahrzeug mit den Merkmalen des Anspruchs 1. Ein wesentliches Merkmal des erfindungsgemäßen Kraftfahrzeugs, das in Kombination mit den weiteren für die vorliegende Erfindung charakteristischen Merkmalen in besonderer Weise zur Lösung der Aufgabenstellung beiträgt, ist die Anordnung der ein elektrisches Heizelement umfassenden Kraftstoffverdampfungseinheit in räumlicher Trennung zu abgasführenden Bauteilen. Insbesondere bedeutet dies, daß die Kraftstoffverdampfungseinheit nicht in eines der der Katalysatoreinheit vorgeschalteten abgasführenden Bauteile hineinragt. Die räumliche Trennung der Kraftstoffverdampfungseinheit von abgasführenden Bauteilen und die Einspeisung des durch die Kraftstoffverdampfungseinheit bereitgestellten Kraftstoffsdampfes in die Abgasleitung vor der Katalysatoreinheit über einen Kraftstoffdampfeinspeiskanal verhindert, daß die Kraftstoffverdampfungseinheit im Betrieb des Fahrzeugs den erheblich schwankenden Abgastemperaturen ausgesetzt ist. Auf diese Weise lassen sich die Umgebungsbedingungen, unter denen die Kraftstoffverdampfungseinheit Kraftstoffdampf bereitzustellen hat, besser kontrollieren und vergleichmäßigen. Dies wiederum gestattet, die ein elektrisches Heizelement umfassende Kraftstoffverdampfungseinheit hinsichtlich ihrer Funktion so zu optimieren, daß sie geeignet ist, mit gleichbleibend gutem Resultat Dieselkraftstoff zu verdampfen. Des weiteren wirkt sich die Zufuhr des durch die Kraftstoffverdampfungseinheit bereitgestellten Kraftstoffsdampfes in die Abgasleitung über einen Kraftstoffdampfeinspeiskanal dahingehend aus, daß die Strömungsverhältnisse innerhalb der Abgasleitung weniger beeinträchtigt werden als bei Einsatz herkömmlicher Brenner und daß ein deutlich gesteigertes Maß an Flexibilität hinsichtlich der räumlichen Anordnung bzw. Unterbringung der Kraftstoffverdampfungseinheit besteht; letzteres ist bei modernen Fahrzeugen, bei denen bisweilen außerordentlich beengte Einbauverhältnisse für die Abgasanlage bestehen, von besonderem Vorteil.

Das vorstehend erläuterte, bei erfindungsgemäßen Kraftfahrzeugen realisierte System läßt sich insbesondere für die Regeneration eines Partikelfilters einsetzen. Im diesem Fall wird der gesamte in der Kraftstoffverdampfungseinheit erzeugte Kraftstoffdampf dem Abgasstrom stromaufwärts eines dem Rußfilter vorgeschalteten Oxidationskatalysators zugeführt, wobei in Abhängigkeit von dem jeweiligen Betriebspunkt des Motors eine solche Menge an Kraftstoff verdampft und anschließend in dem Oxidationskatalysator katalytisch verbrannt wird, daß die Temperatur des Abgases hinter dem Oxidationskatalysator für die Regeneration des nachgeschalteten Partikelfilters ausreicht.

Eine erste bevorzugte Weiterbildung der Erfindung zeichnet sich dadurch aus, daß der Kraftstoffdampfeinspeiskanal in eine als Venturi-Düse ausgebildete Querschnittsverengung des betreffenden abgasführenden Bauteils mündet. Die hieraus resultierende Druckabsenkung in dem Kraftstoffdampfeinspeiskanal und der Kraftstoffverdampfungseinheit begünstigt das Verdampfen des Dieselkraftstoffs und trägt durch entsprechende Absenkung des Siedebereichs zu einer Verringerung der für das Verdampfen benötigten elektrischen Energie bei.

Gemäß einer anderen bevorzugten Weiterbildung der Erfindung ist vorgesehen, daß die Kraftstoffverdampfungseinheit eine stehend angeordnete Glühkerze umfaßt, welche unter Einhaltung eines Ringspalts von einem Mantelrohr umgeben ist, in welches die Kraftstoffleitung und der Kraftstoffdampfeinspeiskanal münden. Die stehende Anordnung der Glühkerze begünstigt eine besonders homogene Verdampfung des in den zwischen der Glühkerze und dem Mantelrohr definierten Ringraum eingespeisten Dieselkraftstoffs. Ein besonders gutes Verdampfungsverhalten ergibt sich dabei, wenn die lichte Weite des genannten Ringspalts zwischen 0,6 mm und 2 mm beträgt. Bei einer solchen Dimensionierung ergeben sich im Hinblick auf das Verdampfungsergebnis optimale Verhältnisse der einzelnen Einflußgrößen wie Wärmeübertragung, Tröpfchenbildung durch Sieden, Kapillareffekte und dergleichen.

Als besonders günstig hat es sich herausgestellt, wenn in dem zwischen der Glühkerze und dem Mantelrohr bestehenden Ringspalt ein spiralförmiges Leitelement angeordnet ist. Dieses führt den erhitzten und siedenden Kraftstoff und anschließend den Kraftstoffdampf spiralförmig um die Glühkerze herum, so daß zum einen lokale Wärmeunterschiede auf der Oberfläche der Glühkerze ausgeglichen werden und durch den entsprechend längeren Strömungsweg eine Homogenisierung des aufbereiteten Kraftstoffsdampfes erfolgt. Zum anderen wirken infolge der Drallströmung auf eventuell entstehende Kraftstofftröpfchen Fliehkräfte, die deren Abscheiden an dem Mantelrohr begünstigen, so daß selbst bei besonders kompakt ausgeführten Kraftstoffverdampfungseinheiten die Gefahr, daß Kraftstofftröpfchen in den Abgasstrom gelangen, sehr gering ist. Noch weiter reduzieren läßt sich diese Gefahr dadurch, daß der Kraftstoffdampfeinspeiskanal mit seinem der Kraftstoffverdampfungseinheit zugeordneten Ende in das Mantelrohr oberhalb der Glühkerze hineinragt. Denn in diesem Falle liegt dergestalt eine zyklonartige Funktion der aus der Kraftstoffverdampfungseinheit und dem Kraftstoffdampfeinspeiskanal gebildeten Einheit vor, daß der aus der Kraftstoffverdampfungseinheit entnommene Kraftstoffdampf frei ist von allen fliehkraftbedingt radial nach außen in Richtung auf das Mantelrohr driftenden Kraftstofftröpfchen.

Eine abermals andere Weiterbildung der Erfindung zeichnet sich dadurch aus, daß das Mantelrohr von einem Isolator umgeben ist. Hierdurch läßt sich mit dem Ziel einer weitergehenden Optimierung des Verdampfungsvorganges das Milieu, in welchem die Verdampfungseinheit arbeitet, weiter vergleichmäßigen.

Was die Dimensionierung des Kraftstoffdampfeinspeiskanals angeht, so beträgt besonders bevorzugt im Bereich der Mündung des Kraftstoffdampfeinspeiskanals das Verhältnis des Querschnitts des Kraftstoffdampfeinspeiskanals zum Querschnitt des abgasführenden Bauteils zwischen 0,006 und 0,015. Dieses Verhältnis erweist sich als besonders günstig im Hinblick auf eine ausreichend gute Vermischung des in den Abgasstrom eingespeisten Kraftstoffsdampfes ohne Beeinträchtigung der Strömungsverhältnisse in der Abgasleitung außerhalb des Regenerationsbetriebs.

Die für den Regenerationsbetrieb benötigte Menge an Kraftstoffdampf richtet sich nach den im Einzelfall bestehenden Verhältnissen. Ist aufgrund entsprechender baulicher Gegebenheiten zur Einleitung der Regeneration des Partikelfilters durch die Kraftstoffverdampfungseinheit innerhalb kurzer Zeit eine besonders große Menge an Kraftstoffdampf bereitzustellen, so kann es sich - insbesondere mit Rücksicht auf die Leistungsfähigkeit des elektrischen Bordnetzes des betreffenden Fahrzeugs - als günstig erweisen, der Kraftstoffverdampfungseinheit eine Vorwärmstufe vorzuschalten, in der der Kraftstoff vorgewärmt wird. Insbesondere kann eine derartige Vorwärmstufe einen Zwischenspeicher umfassen, in welchem etwa die für eine einmalige Regeneration des Partikelfilters erforderliche Menge an Kraftstoff zwischengespeichert und über ein geeignetes Vorheizelement insbesondere in Form eines elektrischen Widerstands-Heizelements auf ein Temperaturniveau geringfügig unterhalb der Siedetemperatur vorgewärmt wird. Die allmähliche Vorwärmung des Kraftstoffs über einen längeren Zeitraum, nämlich über das Intervall zwischen jeweils zwei Regenerationen kommt dabei der Leistungsfähigkeit der elektrischen Anlage herkömmlicher Kraftfahrzeuge entgegen. Additiv oder alternativ zu einem elektrischen Heizelement kann die Vorwärmstufe auch einen in dem Abgasstrom angeordneten Wärmetauscher umfassen, in dem der später in der Kraftstoffverdampfungseinheit zu verdampfende Kraftstoff unter Nutzung der Wärme des Abgases erwärmt wird.

Vor einem vergleichbaren Hintergrund kann es gemäß einer abermals anderen bevorzugten Weiterbildung der Erfindung zweckmäßig sein, in dem Zeitintervall zwischen zwei Regenerationen bereits die für die Regeneration des Rußfilters benötigte Menge an Kraftstoff zu verdampfen und abrufbar vorzuhalten. Hierzu umfaßt die Kraftstoffverdampfungseinheit zweckmäßigerweise einen Druckbehälter mit einer darin angeordneten Heizeinrichtung. Der während der Regeneration aus dem Druckbehälter abströmende Kraftstoffdampf kann, insbesondere zu seiner Homogenisierung und/oder weiteren Erhitzung, bei Bedarf noch über einen Nacherhitzer geleitet werden. Die vorstehenden Ausführungen zur Vorwärmung des der Kraftstoffverdampfungseinheit zugeführten Kraftstoffs in einer Vorwärmstufe gelten hier in gleicher Weise.

Wird die Erfindung zur Regeneration eines Partikelfilters eingesetzt, ist gemäß einer abermals anderen bevorzugten Weiterbildung der Erfindung ist vorgesehen, daß die Oxidationskatalysatoreinheit und der Partikelfilter in getrennten Gehäusen untergebracht sind. Dies ermöglicht eine besonders hohe Reaktionsdichte in der (hinsichtlich ihrer Bauweise speziell auf diese Funktion abgestimmten) Oxidationskatalysatoreinheit mit dem Ergebnis einer schnellen Reaktion und infolgedessen einer raschen Einleitung der Regeneration des Partikelfilters und einem geringen Kraftstoffverbrauch. Zudem läßt sich in diesem Falle durch entsprechende bauliche Maßnahmen eine homogenere Temperaturverteilung des aufgeheizten Abgases beim Eintritt in den Partikelfilter sicherstellen. Zwingend ist die Unterbringung der Oxidationskatalysatoreinheit und des Partikelfilters in getrennten Gehäusen im Rahmen der vorliegenden Erfindung indessen keinesfalls. Vielmehr kann es sich unter besonderen Voraussetzungen, beispielsweise hinsichtlich der Einbauverhältnisse, auch als günstig erweisen, wenn die Oxidationskatalysatoreinheit und der Partikelfilter in einem gemeinsamen Gehäuse untergebracht sind, namentlich indem die Oxidationskatalysatoreinheit durch einen katalytisch beschichteten Bereich des Partikelfilters gebildet ist.

Eine wiederum andere bevorzugte Weiterbildung der vorliegenden Erfindung zeichnet sich schließlich dadurch aus, daß zwischen der Oxidationskatalysatoreinheit und dem Partikelfilter ein Temperatursensor angeordnet ist, welcher mit einer Steuereinheit in Verbindung steht, welche dem Regenerationsbetrieb die Förderleistung einer die Kraftstoffverdampfungseinheit speisenden Kraftstoffpumpe in Abhängigkeit von der ermittelten Abgastemperatur vor dem Partikelfilter steuert. In diesem Falle läßt sich durch entsprechende automatische Variation der der Kraftstoffverdampfungseinheit durch die Kraftstoffpumpe zugeführten Kraftstoffmenge der jeweilige Motorbetriebspunkt und die Abhängigkeit der Abgastemperatur von diesem berücksichtigen mit dem Ergebnis, daß sich durch entsprechende Anpassung der verdampften Kraftstoffmenge die Abgastemperatur vor dem Partikelfilter auf einen für die Regeneration des betreffenden Filters optimale Temperatur (z.B. 650 °C) einregeln läßt.

Im folgenden wird die vorliegende Erfindung anhand einiger in der Zeichnung veranschaulichter bevorzugter Ausführungsbeispiele näher erläutert. Dabei zeigt
- Fig. 1: den vorliegend maßgeblichen Ausschnitt einer nach der vorliegenden Erfindung ausgeführten Abgasanlage in schematischer Ansicht,
- Fig. 2: einen Vertikalschnitt durch die bei der Abgasanlage nach Fig. 1 eingesetzte Kraftstoffverdampfungseinheit,
- Fig. 3: in schematischer Ansicht eine mögliche Kombination der in Fig. 2 veranschaulichten Kraftstoffverdampfungseinheit mit einer Vorwärmstufe und
- Fig. 4: in schematischer Ansicht die mögliche Ausführung der Kraftstoffverdampfungseinheit für eine Vorverdampfung.

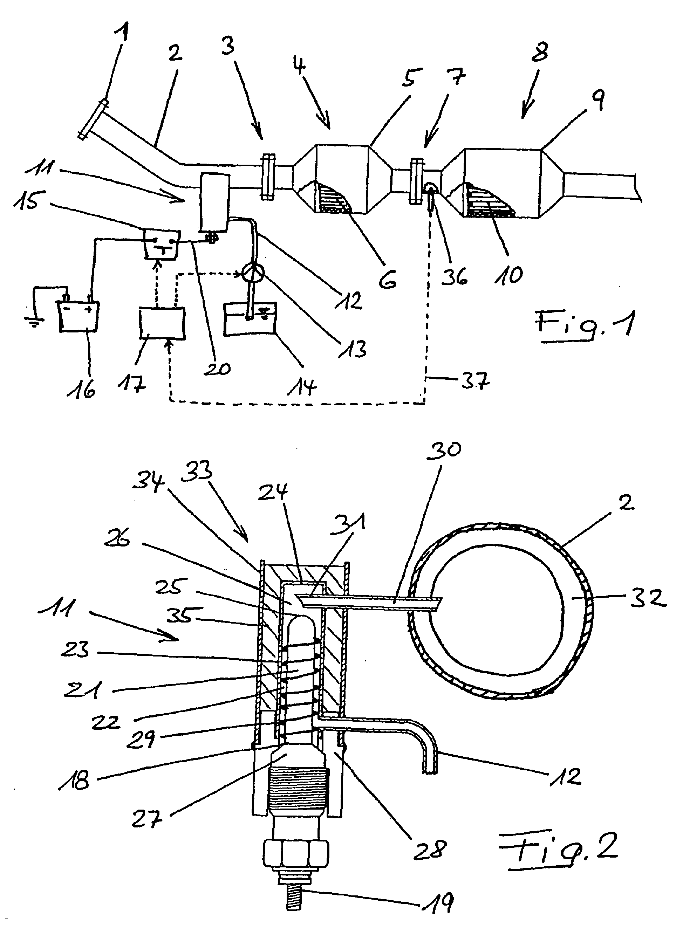

Der in Fig. 1 dargestellte Ausschnitt einer Abgasanlage umfaßt ein über einen Flansch 1 an einen Krümmer anschließbares Vorrohr 2, eine über eine Flanschverbindung 3 an das Vorrohr 2 angeschlossene Katalysator-Baugruppe 4 mit einer in einem Katalysatorgehäuse 5 untergebrachten Oxidationskatalysatoreinheit 6 und eine über eine Flanschverbindung 7 an die Katalysator-Baugruppe 4 angeschlossene Filter-Baugruppe 8 mit einem in einem Partikelfiltergehäuse 9 untergebrachten Partikelfilter 10. Dem Vorrohr 2 ist relativ nahe an der Flanschverbindung 3 eine Kraftstoffverdampfungseinheit 11 zugeordnet, welche verdampften Dieselkraftstoff in den das Vorrohr 2 durchströmenden Abgasstrom einspeist.

Über eine Kraftstoffleitung 12, in welche eine Pumpe 13 integriert ist, steht die Kraftstoffverdampfungseinheit 11 mit dem Kraftstofftank 14 des Fahrzeugs in Verbindung. Des weiteren ist die Kraftstoffverdampfungseinheit 11 über einen Schalter 15 an die Stromversorgung 16 des Fahrzeugs angeschlossen. Der Schalter 15 wird dabei von einer in als solches bekannter Weise aufgebauten Steuereinheit 17 gesteuert, die unter Auswertung verschiedener Eingangsgrößen, insbesondere des an dem Partikelfilter bestehenden Druckgefälles, die Regeneration einleitet, indem der Schalter 15 geschlossen und - mit einer definierten zeitlichen Verzögerung - die Pumpe 13 in Betrieb gesetzt wird.

Die Kraftstoffverdampfungseinheit 11 umfaßt ein elektrisches Heizelement in Form einer Glühkerze 18 in stehender Anordnung. An den elektrischen Anschluß 19 ist das elektrische Anschlußkabel 20 (vgl. Fig. 1) angeschlossen. Der zylindrische Glühstift 21 der Glühkerze 18 ist unter Einhaltung eines eine lichte Weite von 1 mm aufweisenden Ringspalts 22 von einem Mantelrohr 23 umgeben. Das Mantelrohr ist stirnseitig durch einen Deckel 24 dicht verschlossen, wobei durch einen entsprechenden Abstand des Deckels 24 zur Spitze 25 des Glühstifts 21 ein Dampfentnahmeraum 26 gebildet wird. Zum Sockel 27 der Glühkerze 18 hin ist das Mantelrohr 23 über die Fassung 28 dicht abgeschlossen.

In dem Ringspalt 22 ist ein spiralförmiges Leitelement 29 untergebracht, welches den Glühstift 21 wendelförmig umgibt. Die Kraftstoffleitung 12 mündet in dem Mantelrohr 23 benachbart zum Sockel 27 der Glühkerze 18.

Ein die Kraftstoffverdampfungseinheit 11 mit dem Vorrohr 2 verbindender röhrchenförmiger Kraftstoffdampfeinspeiskanal 30 ragt mit seinem der Kraftstoffverdampfungseinheit 11 zugeordneten, einen Kraftstoffdampfentnahmestutzen 31 bildenden Ende in den Dampfentnahmeraum 26 hinein. Das dem Vorrohr 2 zugeordnete Ende des Kraftstoffdampfeinspeiskanals 30 ragt in das Vorrohr 2 hinein, und zwar im engsten Querschnitt eines in das Vorrohr 2 eingesetzten Venturi-Einsatzes 32.

Die Kraftstoffverdampfungseinheit 11 umfaßt einen das Mantelrohr 23 umgebenden Isolator 33, welcher ein Hüllrohr 34 und eine den zwischen dem Mantelrohr 23 und dem Hüllrohr 34 bestehenden Zwischenraum ausfüllende Dämmung 35 umfaßt.

Zwischen der Oxidationskatalysatoreinheit 6 und dem Partikelfilter 10 ist ein Temperatursensor 36 angeordnet. Dieser erfaßt die Temperatur des Abgases vor dem Partikelfilter; er steht über eine Signalleitung 37 mit der Steuereinheit 17 in Verbindung, welche im Regenerationsbetrieb die Förderleistung der die Kraftstofrverdampfungseinheit 11 speisenden Kraftstoffpumpe 13 in Abhängigkeit von der ermittelten Abgastemperatur vor dem Partikelfilter 10 steuert.

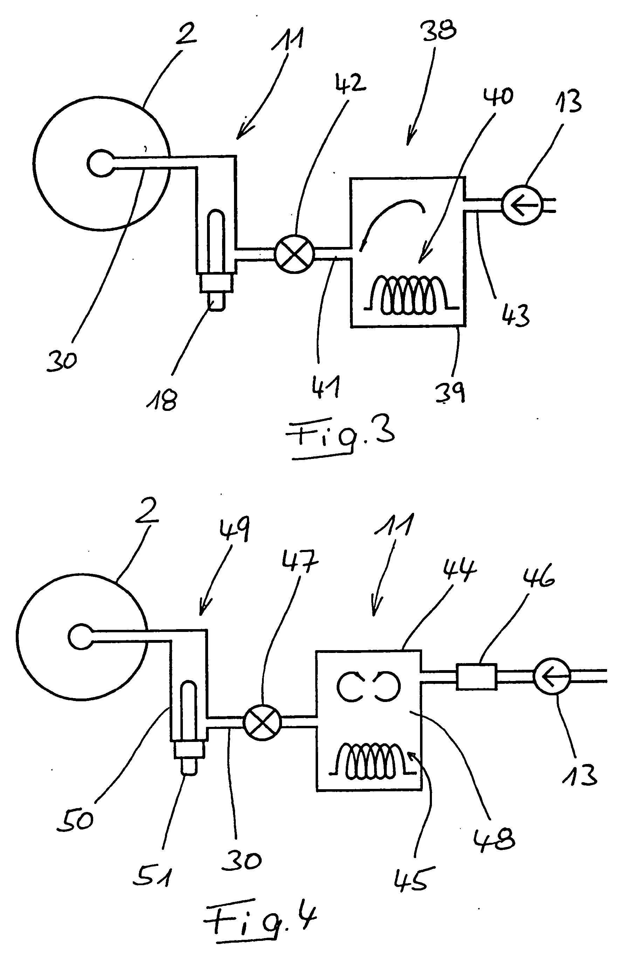

Fig. 3 veranschaulicht eine Möglichkeit, der Kraftstoffverdampfungseinheit 11 eine Vorwärmstufe 38 vorzuschalten. Bei dem in Fig. 3 gezeigten Ausführungsbeispiel umfaßt die Vorwärmstufe 38 einen Zwischenspeicher 39, dessen Fassungsvermögen auf die für eine einmalige Regenerationen des Partikelfilters erforderliche Kraftstoffmenge ausgelegt ist. Mittels der Pumpe 13 wird Kraftstoff aus dem Kraftstofftank des Fahrzeugs in den Zwischenspeicher 39 gefördert. Innerhalb des Zwischenspeichers 39 ist ein Vorheizelement 40 in Form eines elektrischen Widerstands-Heizelements angeordnet. Mit diesem wird der in den Zwischenspeicher aufgenommene Kraftstoff allmählich erwärmt, so daß seine Temperatur bei Einleitung der Regeneration geringfügig unterhalb der Siedetemperatur liegt.

In dem Strömungskanal 41, durch welchen hindurch vorgewärmter Kraftstoff aus der Vorwärmstufe 38 der Kraftstoffverdampfungseinheit 11 zugeführt wird, ist ein Ventil 42 angeordnet, welches - ebenso wie die Pumpe 13 - von einer Steuereinheit entsprechend gesteuert wird, um die Regeneration einzuleiten bzw. zu beenden.

An dem Zwischenspeicher 39 sind der Kraftstoffzufuhrstutzen 43 und der Kraftstoffaustrittsstutzen dergestalt angeordnet, daß während der Regeneration des Partikelfilters eine möglichst geringe Vermischung des in den Zwischenspeicher nachgeförderten Kraftstoffs mit dem bereits vorgewärmten Kraftstoff erfolgt, so daß dieser auf einem möglichst hohen Temperaturniveau zur Kraftstoffverdampfungseinheit 11 gelangt.

Die in Fig. 4 veranschaulichte Einrichtung ist geeignet, den gesamten für die Regeneration des Partikelfilters benötigten Kraftstoffdampf "auf Vorrat" herzustellen und abrufbar bereitzustellen. Hierzu umfaßt die Kraftstoffverdampfungseinheit 11 einen Druckbehälter 44 mit einer darin angeordneten elektrischen Heizeinrichtung 45. Dem Kraftstofftank des Fahrzeugs entnommener Kraftstoff wird dem Druckbehälter mittels der Pumpe 13 und über ein Ventil 46 zugeführt. Ein weiteres Ventil 47 ist dem Druckbehälter 44 nachgeschaltet. Durch entsprechende Beaufschlagung der Heizeinrichtung 45 wird der in den Druckbehälter 44 eingespeiste Kraftstoff allmählich verdampft. Der entstehende Dampf 48 wird bis zur Einleitung der Regeneration in dem Druckbehälter 44 bevorratet.

Wird zur Einleitung der Regeneration des Partikelfilters das Ventil 47 geöffnet, strömt der zuvor aufbereitete Kraftstoffdampf 48 über den Kraftstoffdampfeinspeiskanal 30 in das Vorrohr 2. In den Kraftstoffdampfeinspeiskanal ist ein Nacherhitzer 49 integriert. Dieser umfaßt eine in ein Mantelrohr 50 eingesetzte Glühkerze 51, an deren Oberfläche der Kraftstoffdampf 48 homogenisiert und nacherhitzt wird, bevor er in den Abgasstrom gelangt.

## Patentansprüche

1. Kraftfahrzeug mit einem Diesel-Antriebsmotor, dessen Abgasanlage ein diskontinuierlich regenerierbares Abgasreinigungssystem aufweist, wobei das Abgasreinigungssystem einen diskontinuierlich regenerierbaren Partikelfilter (8) und eine diesem vorgeschaltete Oxidationskatalysatoreinheit (4) umfaßt, welche Dieselkraftstoff katalytisch verbrennt, wobei die Oxidationskatalysatoreinheit im Regenerationsbetrieb unter katalytischer Verbrennung des durch die Kraftstoffverdampfungseinheit (11) bereitgestellten Kraftstoffdampfs das dem Partikelfilter zuströmende Abgas aufheizt,
wobei der Katalysatoreinheit (6) eine Kraftstoffverdampfungseinheit (11) vorgeschaltet ist, die ein elektrisches Heizelement umfaßt, über eine Kraftstoffleitung (12) mit dem Kraftstofftank (14) des Fahrzeugs in Verbindung steht und in räumlicher Trennung zu abgasführenden Bauteilen angeordnet ist;
wobei zwischen der Kraftstoffverdampfungseinheit (11) und einem abgasführenden Bauteil sich ein Kraftstoffdampfeinspeiskanal (30) erstreckt, welcher stromaufwärts zur Katalysatoreinheit (6) in ein abgasführendes Bauteil mündet;
**dadurch gekennzeichnet, daß** die Kraftstoffverdampfungseinheit (11) ein Mantelrohr (23) aufweist, an das nur die Kraftstoffleitung (12) und der Kraftstoffdampfeinspeiskanal (30) angeschlossen sind.

2. Kraftfahrzeug nach Anspruch 1,
**dadurch gekennzeichnet,**
**daß** der Kraftstoffdampfeinspeiskanal (30) in eine als Venturi-Düse ausgebildete Querschnittsverengung des betreffenden abgasführenden Bauteils mündet.

3. Kraftfahrzeug nach einem der Ansprüche 1 bis 2,
**dadurch gekennzeichnet,**
**daß** die Kraftstoffverdampfungseinheit (11) eine stehend angeordnete Glühkerze (18) umfaßt, welche unter Einhaltung eines Ringspalts (22) von einem Mantelrohr (23) umgeben ist, in welches die Kraftstoffleitung (12) und der Kraftstoffdampfeinspeiskanal (30) münden.

4. Kraftfahrzeug nach Anspruch 3,
**dadurch gekennzeichnet,**
**daß** die lichte Weite des Ringspalts (22) zwischen 0,6 mm und 2 mm beträgt.

5. Kraftfahrzeug nach Anspruch 3 oder Anspruch 4,
**dadurch gekennzeichnet,**
**daß** in dem Ringspalt (22) ein spiralförmiges Leitelement (29) angeordnet ist.

6. Kraftfahrzeug nach einem der Ansprüche 3 bis 5,
**dadurch gekennzeichnet,**
**daß** der Kraftstoffdampfeinspeiskanal (30) mit seinem der Kraftstoffverdampfungseinheit (11) zugeordneten Ende in das Mantelrohr (23) hineinragt.

7. Kraftfahrzeug nach einem der Ansprüche 3 bis 6,
**dadurch gekennzeichnet,**
**daß** das Mantelrohr (23) von einem Isolator (33) umgeben ist.

8. Kraftfahrzeug nach einem der Ansprüche 1 bis 7,
**dadurch gekennzeichnet,**
**daß** der Kraftstoffverdämpfungseinheit (11) eine Vorwärmstufe (38) für den zu verdampfenden Kraftstoff vorgeschaltet ist.

9. Kraftfahrzeug nach Anspruch 8,
**dadurch gekennzeichnet,**
**daß** die Vorwärmstufe (38) einen Zwischenspeicher (39) mit einer darin angeordneten Heizeinrichtung (40) umfaßt.

10. Kraftfahrzeug nach Anspruch 9,
**dadurch gekennzeichnet,**
**daß** die Vorwärmstufe einen dem Abgasstrom ausgesetzten Wärmetauscher umfaßt.

11. Kraftfahrzeug nach einem der Ansprüche 1 bis 2,
**dadurch gekennzeichnet,**
**daß** die Kraftstoffverdampfungseinheit (11) einen mittels zweier Ventile (46, 47) absperrbaren Druckbehälter (44) mit einer darin angeordneten Heizeinrichtung (45) umfaßt.

12. Kraftfahrzeug nach Anspruch 11,
**dadurch gekennzeichnet,**
**daß** der Kraftstoffverdampfungseinheit (11) ein Nacherhitzer (49) für den dem Druckbehälter (44) entströmenden Kraftstoffdampf (48) nachgeschaltet ist.

13. Kraftfahrzeug nach einem der Ansprüche 1 bis 12,
**dadurch gekennzeichnet,**
**daß** im Bereich der Mündung des Kraftstoffdampfeinspeiskanals (30) das Verhältnis des Querschnitts des Kraftstoffdampfeinspeiskanals zum Querschnitt des abgasführenden Bauteils zwischen 0,006 und 0,015 beträgt.

14. Kraftfahrzeug nach Anspruch 1,
**dadurch gekennzeichnet,**
**daß** die Oxidationskatalysatoreinheit (6) und der Partikelfilter (10) in getrennten Gehäusen (5; 9) untergebracht sind.

15. Kraftfahrzeug nach Anspruch 1,
**dadurch gekennzeichnet,**
**daß** die Oxidationskatalysatoreinheit (6) und der Partikelfilter (10) in einem gemeinsamen Gehäuse untergebracht sind.

16. Kraftfahrzeug nach Anspruch 15,
**dadurch gekennzeichnet,**
**daß** die Oxidationskatalysatoreinheit (6) durch einen katalytisch beschichteten Bereich des Partikelfilters (10) gebildet ist.

17. Kraftfahrzeug nach Anspruch 1,
**dadurch gekennzeichnet,**
**daß** zwischen der Oxidationskatalysatoreinheit (6) und dem Partikelfilter (10) ein Temperatursensor (36) angeordnet ist, welcher mit einer Steuereinheit (17) in Verbindung steht, welche im Regenerationsbetrieb die Förderleistung einer die Kraftstoffverdampfungseinheit (11) speisenden Kraftstoffpumpe (13) in Abhängigkeit von der ermittelten Abgastemperatur vor dem Partikelfilter (10) steuert.

## Claims

1. A motor vehicle having a diesel drive engine, the exhaust system of which includes an exhaust gas purification system that is adapted to be discontinuously regenerated, the exhaust gas purification system comprising a particulate filter (8) adapted to be discontinuously regenerated and an oxidation catalytic converter unit (4) which is connected upstream thereof and catalytically burns diesel fuel, the oxidation catalytic converter unit heating up the exhaust gas streaming into the particulate filter in the regeneration operation while catalytically burning the fuel vapor provided by the fuel vaporization unit (11), the catalytic converter unit (6) having a fuel vaporization unit (11) connected upstream thereof which comprises an electric heating element, is in communication with the fuel tank (14) of the vehicle via a fuel pipe (12), and is arranged so as to be spatially separated from any exhaust gas carrying components; a fuel vapor feed duct (30) extending between the fuel vaporization unit (11) and an exhaust gas carrying component and opening into an exhaust gas carrying component upstream of the catalytic converter unit (6);
**characterized in that** the fuel vaporization unit (11) has a jacket tube (23) to which only the fuel pipe (12) and the fuel vapor feed duct (30) are connected.

2. The motor vehicle according to claim 1,
**characterized in that**
the fuel vapor feed duct (30) opens into a reduction of cross-sectional area in the form of a venturi tube of the exhaust gas carrying component concerned.

3. The motor vehicle according to either of claims 1 and 2,
**characterized in that**
the fuel vaporization unit (11) comprises a glow plug (18) which is arranged upright and is surrounded by a jacket tube (23), keeping an annular gap (22), the fuel pipe (12) and the fuel vapor feed duct (30) opening into the jacket tube (23).

4. The motor vehicle according to claim 3,
**characterized in that**
the inner width of the annular gap (22) amounts to between 0.6 mm and 2 mm.

5. The motor vehicle according to claim 3 or claim 4,
**characterized in that**
a helical guide member (29) is arranged in the annular gap (22).

6. The motor vehicle according to any of claims 3 to 5,
**characterized in that**
the fuel vapor feed duct (30) projects into the jacket tube (23) by its end associated with the fuel vaporization unit (11).

7. The motor vehicle according to any of claims 3 to 6,
**characterized in that**
the jacket tube (23) is surrounded by an insulator (33).

8. The motor vehicle according to any of claims 1 to 7,
**characterized in that**
a preheating stage (38) for the fuel to be vaporized is connected upstream of the fuel vaporization unit (11).

9. The motor vehicle according to claim 8,
**characterized in that**
the preheating stage (38) comprises an intermediate storage (39) having a heating means (40) arranged therein.

10. The motor vehicle according to claim 9,
**characterized in that**
the preheating stage comprises a heat exchanger exposed to the exhaust gas stream.

11. The motor vehicle according to either of claims 1 and 2,
**characterized in that**
the fuel vaporization unit (11) comprises a pressure vessel (44) which can be shut off by means of two valves (46, 47) and has a heating means (45) arranged therein.

12. The motor vehicle according to claim 11,
**characterized in that**
a post-heater (49) for the fuel vapor (48) streaming out of the pressure vessel (44) is connected downstream of the fuel vaporization unit (11).

13. The motor vehicle according to any of claims 1 to 12,
**characterized in that**
in the region of the orifice of the fuel vapor feed duct (30) the ratio of the cross-section of the fuel vapor feed duct to the cross-section of the exhaust gas carrying component amounts to between 0.006 and 0.015.

14. The motor vehicle according to claim 1,
**characterized in that**
the oxidation catalytic converter unit (6) and the particulate filter (10) are accommodated in separate housings (5; 9).

15. The motor vehicle according to claim 1,
**characterized in that**
the oxidation catalytic converter unit (6) and the particulate filter (10) are accommodated in a shared housing.

16. The motor vehicle according to claim 15,
**characterized in that**
the oxidation catalytic converter unit (6) is formed by a catalytically coated portion of the particulate filter (10).

17. The motor vehicle according to claim 1,
**characterized in that**
arranged between the oxidation catalytic converter unit (6) and the particulate
filter (10) is a temperature sensor (36) which is connected to a control unit (17) which in the regeneration operation controls the delivery rate of a fuel pump (13) feeding the fuel vaporization unit (11) as a function of the exhaust gas temperature ascertained upstream of the particulate filter (10).

## Revendications

1. Véhicule automobile comportant un moteur d'entraînement diesel, dont le système de gaz d'échappement présente un système d'épuration de gaz d'échappement à régénération discontinue, le système d'épuration de gaz d'échappement comprenant un filtre à particules (8) à régénération discontinue et une unité de catalyseur d'oxydation (4) montée en amont de celui-ci, laquelle brûle le carburant diesel par la voie catalytique, l'unité de catalyseur d'oxydation chauffant le gaz d'échappement affluent dans le filtre à particules dans le mode opératoire de régénération en brûlant par la voie catalytique la vapeur de carburant fournie par l'unité de vaporisation de carburant (11), en amont de l'unité de catalyseur (6) étant montée une unité de vaporisation de carburant (11) qui comprend un élément de chauffage électrique qui est en communication avec le réservoir de carburant (14) du véhicule via une conduite de carburant (12) et qui est agencé de manière à être séparé dans l'espace par rapport aux composants conducteurs de gaz d'échappement ; entre l'unité de vaporisation de carburant (11) et un composant conducteur de gaz d'échappement s'étendant un canal d'alimentation de vapeur de carburant (30) qui débouche en amont de l'unité de catalyseur (6) dans un composant conducteur de gaz ;
**caractérisé en ce que** l'unité de vaporisation de carburant (11) présente un tube enveloppe (23) auquel ne sont raccordés que la conduite de carburant (12) et le canal d'alimentation de vapeur de carburant (30).

2. Véhicule automobile selon la revendication 1,
**caractérisé en ce que**
le canal d'alimentation de carburant (30) débouche dans un étranglement de section transversale réalisé sous forme de venturi, du composant conducteur de gaz d'échappement concerné.

3. Véhicule automobile selon l'une des revendications 1 à 2,
**caractérisé en ce que**
l'unité de vaporisation de carburant (11) comprend une bougie de préchauffage (18) agencée debout, qui est entourée par un tube enveloppe (23) en maintenant une fente annulaire (22), dans lequel débouchent la conduite de carburant (12) et le canal d'alimentation de vapeur de carburant (30).

4. Véhicule automobile selon la revendication 3,
**caractérisé en ce que**
la largeur intérieure de la fente annulaire (22) est entre 0,6 mm et 2 mm.

5. Véhicule automobile selon la revendication 3 ou la revendication 4,
**caractérisé en ce que**
dans la fente annulaire (22) est agencé un élément conducteur en forme de spirale (29).

6. Véhicule automobile selon l'une des revendications 3 à 5,
**caractérisé en ce que**
le canal d'alimentation de carburant (30) fait saillie dans le tube enveloppe (23) avec son extrémité associée à l'unité de vaporisation de carburant (11).

7. Véhicule automobile selon l'une des revendications 3 à 6,
**caractérisé en ce que**
le tube enveloppe (23) est entouré par un isolateur (33).

8. Véhicule automobile selon l'une des revendications 1 à 7,
**caractérisé en ce que**
un étage de préchauffage (38) pour le carburant à vaporiser est monté en amont de l'unité de vaporisation de carburant (11).

9. Véhicule automobile selon la revendication 8,
**caractérisé en ce que**
l'étage de préchauffage (38) comprend un accumulateur intermédiaire (39) avec un dispositif de chauffage (40) agencé dans celui-ci.

10. Véhicule automobile selon la revendication 9,
**caractérisé en ce que**
l'étage de préchauffage comprend un échangeur de chaleur exposé au flux de gaz d'échappement.

11. Véhicule automobile selon l'une des revendications 1 à 2,
**caractérisé en ce que**
l'unité de vaporisation de carburant (11) comprend un réservoir de pression (44) qui peut être obturé au moyen de deux soupapes (46, 47), avec un dispositif de chauffage (45) agencé dans celui-ci.

12. Véhicule automobile selon la revendication 11,
**caractérisé en ce que**
en aval de l'unité de vaporisation de carburant (11) est monté un réchauffeur postérieur (49) pour la vapeur de carburant (48) s'échappant hors du réservoir de pression (44).

13. Véhicule automobile selon l'une des revendications 1 à 12,
**caractérisé en ce que**
dans la région de l'embouchure du canal d'alimentation de vapeur de carburant (30), le rapport entre la section transversale du canal d'alimentation de vapeur de carburant et la section transversale du composant conducteur de gaz est entre 0,006 et 0,015.

14. Véhicule automobile selon la revendication 1,
**caractérisé en ce que**
l'unité de catalyseur d'oxydation (6) et le filtre à particules (10) sont logés dans des boîtiers (5 ; 9) séparés.

15. Véhicule automobile selon la revendication 1,
**caractérisé en ce que**
l'unité de catalyseur d'oxydation (6) et le filtre à particules (10) sont logés dans un boîtier commun.

16. Véhicule automobile selon la revendication 15,
**caractérisé en ce que** l'unité de catalyseur d'oxydation (6) est formée par une zone à revêtement catalytique du filtre à particules (10).

17. Véhicule automobile selon la revendication 1,
**caractérisé en ce que**
entre l'unité de catalyseur d'oxydation (6) et le filtre à particules (10) est agencé un capteur de température (36) qui est en communication avec une unité de commande (17) qui, au mode de fonctionnement de régénération, commande la capacité de refoulement d'une pompe à carburant (13) alimentant l'unité de vaporisation de carburant (11) en fonction de la température de gaz d'échappement déterminée en amont du filtre à particules (10).
